# EUROPÄISCHE PATENTSCHRIFT

(11) **EP 3 117 472 B1**
(45) Veröffentlichungstag und Bekanntmachung des Hinweises auf die Patenterteilung: **19.09.2018**
(21) Anmeldenummer: 15703867.0
(22) Anmeldetag: 22.01.2015
(51) Int. Cl.: H01M 2/20, H01M 2/30, H01R 13/22, H01M 10/052

(54) **VERBINDSANORDNUNG ZUR ELEKTRISCHEN KONTAKTIERUNG VON ABLEITERN EINER ELEKTROCHEMISCHEN ZELLE**
CONNECTOR ARRANGEMENT FOR ELECTRICALLY CONTACTING ARRESTERS OF AN ELECTROCHEMICAL CELL
ARRENGEMENT DE CONNECTEUR DE LIAISON ÉLECTRIQUE AVEC LES BORNES DE SORTIE D'UNE CELLULE ÉLECTROCHIMIQUE

(30) Priorität: 10.03.2014 DE 102014103128
(43) Veröffentlichungstag der Anmeldung: 18.01.2017
(73) Patentinhaber: Karlsruher Institut für Technologie (KIT), 76131 Karlsruhe (DE)
(72) Erfinder: BAUMEISTER, Manuel, 76646 Bruchsal (DE); GUTSCH, Andreas, 59348 Lüdinghausen (DE); FLEISCHER, Jürgen, 76228 Karlsruhe (DE)
(86) Internationale Anmeldenummer: PCT/EP2015/000110
(87) Internationale Veröffentlichungsnummer: WO 2015/135612

(56) Entgegenhaltungen:
- WO-A1-2011/111722
- JP-A- 2012 028 061
- US-A1- 2012 164 516
- US-A1- 2013 260 611

## Beschreibung

Die Erfindung betrifft einen Verbinder zur elektrischen Kontaktierung von Ableitern einer elektrochemischen Zelle, sowie einen Ableiter einer elektrochemischen Zelle und eine Batterie mit einer elektrischen Verbindungsanordnung zwischen Ableitern wenigstens zweier elektrochemischer Zellen.

Es ist bekannt, zur Bereitstellung größerer elektrischer Leistungen von elektrochemischen Speichern, insbesondere von Batterien, wie sie z. B. für Elektrofahrzeuge benötigt werden, eine Vielzahl von Zellen zu einem größeren Batteriemodul zusammenzufassen. Zur Erzielung einer ausreichend hohen Ausgangsspannung werden Batteriezellen eines Batteriemoduls elektrisch in Reihe geschaltet, wozu wechselweise die Anoden- und Kathodenableiter stapelförmig angeordneter benachbarter Batteriezellen miteinander zu verbinden sind. Zur Erzielung eines ausreichend hohen Ausgangsstroms werden Batteriezellen eines Batteriemoduls elektrisch parallel geschaltet, wozu die Anodenableiter untereinander und Kathodenableiter untereinander von stapelförmig angeordneten benachbarten Batteriezellen jeweils miteinander zu verbinden sind. Für spezifische Anwendungen werden Reihen- und Parallelschaltung von Batteriezellen üblicherweise miteinander kombiniert. Dabei spielt der Übergangswiderstand der Kontaktstellen eine wichtige Rolle, da durch ihn die elektrische Verlustleistung der Verbindung definiert wird.

Moderne Batterieblocks bestehen häufig aus Flachzellen in der Form von Pouchzellen auf Lithium-Basis, die als Kern einen Stapel von wechselweise geschichteten Anodenfolien und Kathodenfolien aufweisen, die jeweils durch Separatorfolien voneinander getrennt sind. Der Folienstapel ist in einer Gehäusefolie aufgenommen, die eine umlaufende Siegelnaht aufweist. Ein flacher Kathodenableiter und ein flacher Anodenableiter sind aus der Siegelnaht der Flachzelle herausgeführt und dienen der elektrischen Verbindung der Flachzellen untereinander.
Zur Verschaltung von Ableitern von Batteriezellen sind Klemmverbindungen mit Klemmschrauben bekannt. Aufgrund der durch die Klemmschraube auftretenden Belastung des Ableiters ist eine solche Klemmverbindung für Ableiter jedoch nur sehr bedingt geeignet.
Weiterhin ist eine Verbindung der Ableiter durch Schweißen, Schrauben, Nieten oder gegebenenfalls durch Kleben möglich. Das Verschweißen hat den Nachteil, dass eine Temperatureinbringung stattfindet. Dies sollte vermieden werden, um die Zellen nicht zu beschädigen. Die Verschraubung verursacht einen erhöhten Montageaufwand., Das Nieten hat ebenfalls einen erhöhten Montageaufwand zur Folge. Kleben eignet sich aufgrund der isolierenden Wirkung von Kunststoffen nur bedingt, ist aber durch spezielle Klebstoffe möglich. Bis auf die Schraubverbindung zählen diese Fügeverfahren zu den nichtwiederlösbaren Verbindungstechniken.
Aus der DE 10 2008 049 852 A1 ist eine Vorrichtung zur elektrischen Verbindung von Ableitern von Batteriezellen, insbesondere Pouchzellen bekannt, bei dem ein erstes Kontaktelement mit einer ersten Führungseinrichtung und einer zweiten Führungseinrichtung vorgesehen ist, wobei die erste Führungseinrichtung an einem ersten Ableiter anliegt und die zweite Führungseinrichtung an einem zweiten Ableiter anliegt. Weiterhin ist ein zweites Kontaktelement mit einer ersten Halteeinrichtung und einer zweiten Halteeinrichtung vorgesehen, wobei die erste Halteeinrichtung die erste Führungseinrichtung und den ersten Ableiter umschließt und die zweite Halteeinrichtung die zweite Führungseinrichtung und den zweiten Ableiter umschließt. Durch das Anliegen der Führungseinrichtungen an den Ableitern entsteht ein elektrischer Kontakt zwischen den Führungseinrichtungen und den Ableitern. Die Halteeinrichtungen umschließen die Führungseinrichtungen und die Ableiter so, dass die Führungseinrichtungen und die Ableiter zusammengepresst werden.

Aus der US 2012/0164516 A1 ist ein elektrische Verbindungsanordnung gemäß dem Oberbegriff des Anspruchs 1 bekannt.

Darüber hinaus offenbart die JP 2012 028061 A elektrische Verbinder welche aufgesetzte Hülsen aufweisen in welche sich in Kontaktierungsrichtung verjüngende Anschlusspole der Batteriezellen unter Druck eingefügt werden.

Eine Aufgabe der Erfindung ist es daher, eine Verbindungsanordnung zur elektrischen Kontaktierung von Ableitern von elektrochemischen Zellen zu schaffen, welche eine einfache und sichere Montage bei geringer Verlustleistung erlauben.

Weitere Aufgaben der Erfindung bestehen darin, einen elektrochemischen Speicher mit wenigstens zwei Zellen zu schaffen, welcher einfach und sicher bei geringer Verlustleistung verbunden werden können.
Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.
Die Erfindung geht aus von einem Verbinder zur elektrischen Kontaktierung von Ableitern von elektrochemischen Zellen, wobei ein Basiselement mit zwei einander gegenüber liegenden Flachseiten vorgesehen ist. Dabei sind an mindestens einer der beiden Flachseiten ein oder mehrere Kontaktierungselemente angeordnet, welche sich quer zu den Flachseiten in einer Kontaktierungsrichtung erstrecken.
Der erfindungsgemäße Verbinder zur elektrischen Kontaktierung von Ableitern von elektrochemischen Zellen weist ein Basiselement auf, das beispielsweise quaderförmig gestaltet sein kann, und das an wenigstens einer der beiden Flachseiten von der wenigstens einen Flachseite abstehende Kontaktierungselementen aufweist, welche zur Kontaktierung in vorgebohrte Ableiterbleche eingepresst werden können. Die Anzahl der Kontaktierungselemente kann dabei in Abhängigkeit der Größe des Ableiters und des anzustrebenden Übergangswiderstandes der Verbindung Verbinder-Ableiter variieren. Es ist vorteilhaft, wenn die elektrischen Verbindungen hochstromfest sind, da insbesondere bei der Verwendung eines Batteriemoduls in Kraftfahrzeugen hohe Spitzenströme auftreten können. Demzufolge sind niedrige Übergangswiderstände und damit geringe Verlustleistung bei den elektrischen Verbindungen elektrochemischer Zellen anzustreben, was durch eine Erhöhung der Zahl von parallel geschalteten Kontaktierungselementen begünstigt wird.

Besondere Vorteile der erfindungsgemäßen Lösung des Verbinders liegen in der guten mechanischen Festigkeit der Verbindung bei gleichzeitig kleinem elektrischen Übergangswiderstand aufgrund des erzeugten Form- und Stoffschlusses. Gleichzeitig kann die Kontaktierung auch wieder gelöst und wieder verbunden werden, indem der Einpressdruck bei der folgenden Kontaktierung erhöht wird und so wieder ein entsprechender Form- und Stoffschluss erzielbar ist. Damit ist eine Reparaturfähigkeit der Kontaktierung gegeben.

Besonders günstig ist es, wenn die Kontaktierungselemente in Kontaktierungsrichtung, welche der Einpressrichtung entspricht, ihren Querschnitt verkleinern. Beispielsweise können die Kontaktierungselemente konisch zulaufen. Durch die Querschnittsverkleinerung in Kontaktierungsrichtung ist ein Einpressvorgang in entsprechende Öffnungen eines Ableiters einer elektrochemischen Zelle günstig darzustellen, da die Kontaktierungselemente leicht in die Öffnungen eingeführt werden können, bis der Durchmesser des Kontaktierungselements den Durchmesser der Öffnung erreicht. Durch weiteres Erhöhen des Einpressdrucks und eine dadurch eventuell bedingte plastische Verformung des Kontaktierungselements kann so eine sichere Verbindung zwischen Verbinder und Ableiter erreicht werden. Durch diese formschlüssige und gegebenenfalls möglichst auch stoffschlüssige Verbindung kann so ein niedriger Übergangswiderstand erreicht werden.

Eine Möglichkeit der Gestaltung mit sich verjüngendem Querschnitt ist es, wenn die Kontaktierungselemente konisch, insbesondere in Form eines Kegelstumpfes, ausgebildet sind, dessen breiterer Querschnitt der jeweiligen Flachseite zugewandt ist. Auf diese Weise lassen sich die Kontaktierungselemente sicher in runde Öffnungen eines Ableiters einpressen.

Eine weitere Ausgestaltung kann vorsehen, dass die Kontaktierungselemente in Form eines Pyramidenstumpfes ausgebildet sind, dessen breiterer Querschnitt der jeweiligen Flachseite zugewandt ist. Auch derart gestaltete Kontaktierungselemente lassen sich sicher insbesondere in rund, aber auch eckig geformte Öffnungen eines Ableiters einpressen. Alternativ können die Kontaktierungselemente auch einen runden, dreieckigen oder mehreckigen Grundriss aufweisen.

In einer weiteren Ausgestaltung ist es jedoch auch möglich, dass die Kontaktierungselemente zylindrisch ausgeführt sind und in entsprechend angefaste Bohrungen eines Ableiters eingepresst werden. Auch eine solche Verbindung kann sicher und mit niedrigem Übergangswiderstand ausgeführt werden, wenn die Passung der Kontaktierungselemente für eine Einpressung passend gewählt wird.

Dabei kann auch vorgesehen sein, dass die Kontaktierungselemente eines Verbinders so ausgebildet und/oder angeordnet sind, dass diese verwechslungssicher mit den Ableitern verbunden werden können. Dazu können die Kontaktierungselemente eines Verbinders beispielsweise Bereiche aufweisen in denen sich die Querschnitte und/oder Anordnungen von denen anderer Bereiche auf dem Verbinder unterscheiden.

Vorteilhaft kann der Verbinder mit einem wärmeableitenden Medium thermisch koppelbar sein. Jede elektrochemische Zelle, z.B. Batteriezelle, entwickelt sowohl bei der Stromabgabe als auch bei der Stromaufnahme Wärme, die zu einer erhöhten Temperatur des gesamten Batteriemoduls führen kann. Um Schädigungen der Zelle und/oder des aus den Zellen zusammengesetzten Moduls zu vermeiden, soll einerseits Verlustwärme sicher abgeführt werden, andererseits bei zu niedrigen Außentemperaturen eine Temperierung der Batteriemoduls möglich sein. Deshalb ist es günstig, wenn der Verbinder mit einem thermisch leitenden Medium verbunden werden kann, was beispielsweise durch Anschrauben eines entsprechenden Kühlelements oder einer Kühlleitung an das Basiselement des Verbinders erfolgen kann.
Günstigerweise können die Kontaktierungselemente matrixartig in regelmäßig beabstandeten Reihen und Spalten auf der oder den Flachseiten angeordnet sein. So lassen sich bei Einpressen der Kontaktierungselemente in den Ableiter einer elektrochemischen Zelle günstige mechanische Festigkeitswerte erreichen, um so einen stabilen und dauerhaften Verbund von Verbinder und Ableiter zu schaffen.
Vorteilhaft kann der Verbinder aus einem hochwärmeleitfähigen Metall gebildet sein.

Gemäß der erfindungsgemäßen Verbindungsvorrichtung wird ein Ableiter einer elektrochemischen Zelle mit einem Basiskörper vorgeschlagen, der dazu vorgesehen ist, teilweise in die Zelle zu ragen und teilweise aus der Zelle hervorzustehen, wobei der vorstehende Bereich Öffnungen aufweist, welche zur Aufnahme von korrespondierenden Kontaktierungselementen eines beschriebenen Verbinders ausgebildet sind.
Vorteilhaft kann dabei zumindest ein Teil der Öffnungen eine runde Form aufweisen. Eine solche Form eignet sich in günstiger Weise für das Einpressen von kegelstumpfförmigen Kontaktierungselementen, um so eine sichere und dauerhafte Kontaktierung bei niedrigem Übergangswiderstand zu gewährleisten.
In einer weiteren Ausgestaltung kann zumindest ein Teil der Öffnungen eckig ausgebildet sein. Diese Form eignet sich wiederum in günstiger Weise für das Einpressen von pyramidenstumpfförmigen Kontaktierungselementen, um eine sichere und dauerhafte Kontaktierung bei niedrigem Übergangswiderstand zu gewährleisten.
Gemäß eines weiteren Aspekts der Erfindung wird ein elektrochemischer Speicher mit einer elektrischen Verbindungsanordnung zwischen Ableitern wenigstens zweier elektrochemischer Zellen vorgeschlagen, wobei ein Basiselement mit zwei einander gegenüber liegenden Flachseiten vorgesehen ist. Dabei sind an mindestens einer der beiden Flachseiten ein oder mehrere Kontaktierungselemente angeordnet, deren Querschnitt sich in einer Kontaktierungsrichtung quer zu mindestens einer der Flachseiten verjüngt und welche zur elektrischen Kontaktierung in Kontaktierungsrichtung quer zum Ableiter in dazu in dem Ableiter angeordnete korrespondierende Öffnungen einpressbar oder eingepresst sind.
Als elektrochemischer Speicher können Batterien oder Akkumulatoren eingesetzt werden. Denkbar ist auch eine Brennstoffzelle.
Besondere Vorteile der erfindungsgemäßen Lösung der elektrischen Verbindungsanordnung liegen in der guten mechanischen Festigkeit der Verbindung bei gleichzeitig kleinem elektrischen Übergangswiderstand aufgrund des erzeugten Form- und Stoffschlusses. Vorteilhaft kann die Kontaktierung auch wieder gelöst und wieder verbunden werden, indem der Einpressdruck bei der folgenden Kontaktierung erhöht wird und so wieder ein entsprechender Form- und Stoffschluss erzielbar ist.
In einer vorteilhaften Ausgestaltung können auf beiden einander gegenüber liegenden Flachseiten des Basiselements ein oder mehrere Kontaktierungselemente angeordnet sein. Dadurch kann die Verbindungsanordnung die Kontaktierung der Ableiter zweier benachbarter elektrochemischer Zellen umsetzen, indem ein dazwischen liegender Verbinder nach beiden Seiten in die Ableiter eingepresst wird.

Erfindungsgemäß weisen die Öffnungen des Ableiters eine kleinere Querabmessung auf als die beim Einpressen der Kontaktierungselemente in die Öffnungen dazu korrespondierende größte Querabmessung der Kontaktierungselemente. Auf diese Weise ist gewährleistet, dass die Kontaktierungselemente bei Einpressen mit entsprechendem Einpressdruck in den Öffnungen der Ableiter auf Kontakt gehen und bei Erhöhung des Einpressdrucks sich eine stoffschlüssige Kontaktierung ergeben kann.

Vorteilhaft ist es auch, wenn das Basiselement des Verbinders der Verbindungsanordnung mit einem wärmeableitenden Medium thermisch leitend verbunden ist, das dazu vorgesehen ist, Verlustwärme aus dem elektrochemischen Speicher abzuführen. Beispielsweise kann der Verbinder an ein Wäremleitrohr ankoppelbar sein und/oder zumindest teilweise in eine Wärmeleitpaste eingebettet sein. So kann durch die chemischen Prozesse in der elektrochemischen Zelle sowie durch den Übergangswiderstand der Kontaktierung entstehende Verlustwärme günstig abgeführt werden. Weiter kann darüber der elektrochemische Speicher bei niedrigen Temperaturen, beispielsweise Kaltstart eines Fahrzeugs, durch Wärmezufuhr auf eine geeignete Betriebstemperatur eingestellt werden.

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen beispielhaft:
- Fig. 1: eine isometrische Darstellung eines Verbinders zur elektrischen Kontaktierung von Ableitern von elektrochemischen Zellen nach einem Ausführungsbeispiel der Erfindung, bei dem auf einer der Flachseiten des Basiselements Kontaktierungselemente angeordnet sind;
- Fig. 2: eine isometrische Darstellung eines Verbinders zur elektrischen Kontaktierung von Ableitern von elektrochemische Zellen nach einem weiteren Ausführungsbeispiel der Erfindung, bei dem auf beiden Flachseiten des Basiselements Kontaktierungselemente angeordnet sind;
- Fig. 3: eine isometrische Darstellung eines Ableiters einer elektrochemischen Zelle nach einem Ausführungsbeispiel der Erfindung;
- Fig. 4: eine isometrische Darstellung eines Ableiters einer elektrochemischen Zelle mit eingepresstem Verbinder nach einem Ausführungsbeispiel der Erfindung; und
- Fig. 5: eine isometrische Darstellung eines Batteriemoduls aus mehreren elektrochemischen Zellen, welche mit elektrischen Verbindungsanordnungen nach einem Ausführungsbeispiel der Erfindung verbunden sind.
In den Figuren sind gleiche oder gleichartige Komponenten mit gleichen Bezugszeichen beziffert. Die Figuren zeigen lediglich Beispiele und sind nicht beschränkend zu verstehen.

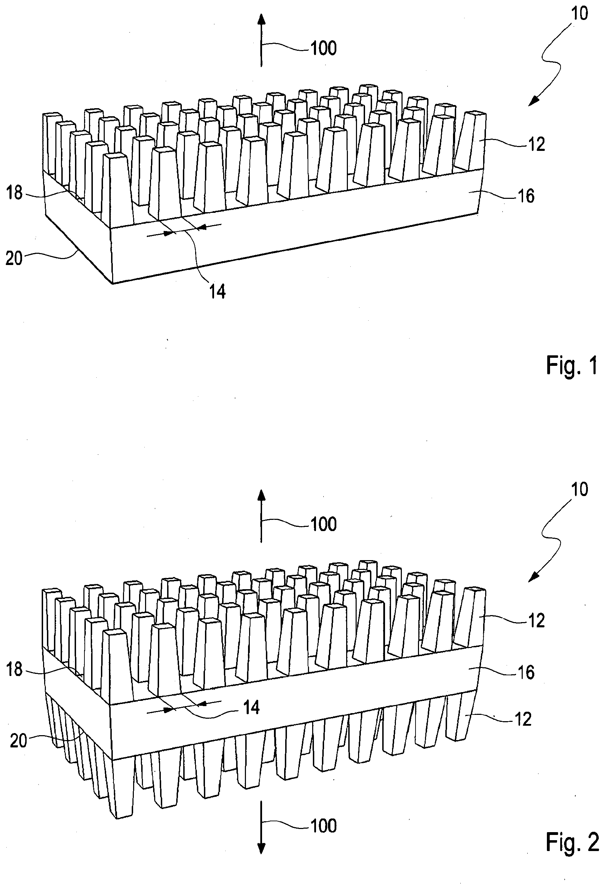

**Figur 1** zeigt eine isometrische Darstellung eines Verbinders 10 zur elektrischen Kontaktierung von Ableitern von elektrochemischen Zellen, insbesondere Batteriezellen, nach einem Ausführungsbeispiel der Erfindung, bei dem auf einer Flachseite 18 eines Basiselements 16 des Verbinders 10 eine Vielzahl von Kontaktierungselementen 12 angeordnet sind. Die Kontaktierungselemente 12 erstrecken sich in einer Kontaktierungsrichtung 100 quer zu den Flachseiten 18, 20. Die Kontaktierungselemente 12 sind in der dargestellten Ausführungsform in Form eines Pyramidenstumpfes ausgebildet, dessen breiterer Querschnitt der Flachseite 18 zugewandt ist. Alternativ können die Kontaktierungselemente 12 jedoch auch konisch zulaufen oder in Form von Kegelstümpfen ausgebildet sein. Die Kontaktierungselemente 12 sind matrixartig auf der oder den Flachseiten 18, 20 angeordnet, um so eine größere Zahl von Kontakten zwischen Verbinder 10 und Ableiter 52 herzustellen. Die Öffnungen eines Ableiters (nicht dargestellt), in welchen die Kontaktierungselemente 12 eingepresst werden sollen, weisen dabei erfindungsgemäß eine kleinere Querabmessung auf als die beim Einpressen der Kontaktierungselemente 12 in die Öffnungen dazu korrespondierende größte Querabmessung 14 der Kontaktierungselemente 12.

Der Verbinder 10 kann mit einem wärmeableitenden Medium thermisch gekoppelt werden, was beispielsweise durch Anschrauben eines entsprechenden Kühlelements oder einer Kühlleitung an das Basiselement 16 des Verbinders 10 über ein Schraubgewinde erfolgen kann.

**Figur 2** zeigt weiter eine isometrische Darstellung eines Verbinders 10 nach einem weiteren Ausführungsbeispiel der Erfindung, bei dem auf beiden Flachseiten 18, 20 des Basiselements 16 des Verbinders 10 Kontaktierungselemente 12 angeordnet sind, welche sich quer zu den Flachseiten 18, 20 in einer Kontaktierungsrichtung 100 erstrecken. Die Kontaktierungselemente 12 sind gleichartig ausgeführt, wie in **Figur 1** dargestellt. Durch die Anordnung auf beiden Flachseiten 18, 20 des Basiselements 16 ist es möglich, mit dem Verbinder 10 zwei neben einander angeordnete elektrochemische Zellen zu verbinden, indem bei einer Parallelschaltung von elektrochemischen Zellen zwei Anodenableiter verbunden werden oder indem bei einer Serienschaltung von elektrochemischen Zellen 50, 60 ein Anodenableiter mit einem Kathodenableiter verbunden wird.

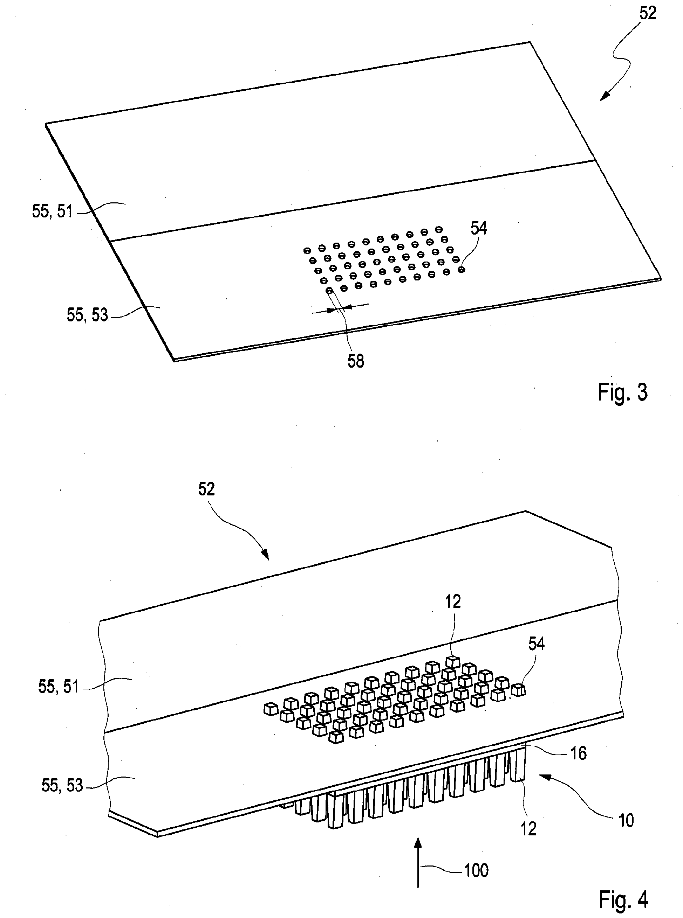

In **Figur 3** ist eine isometrische Darstellung eines Ableiters 52 einer elektrochemischen Zelle (nicht dargestellt) nach einem Ausführungsbeispiel der Erfindung gezeigt. Der Ableiter 52 weist einen Basiskörper 55 auf, der dazu vorgesehen ist, mit einem Bereich 51 in die Zelle zu ragen und mit einem Bereich 53 aus der Zelle hervorzustehen, wobei der in die Zelle ragende Teil des Ableiters 52 mit Anoden- oder Kathodenfolien in der Zelle verbunden ist. Der vorstehende Bereich 53 weist Öffnungen 54 auf, welche zur Aufnahme von korrespondierenden Kontaktierungselementen 12 eines Verbinders 10 (Figur 1, Figur 2) ausgebildet sind. Die Öffnungen 54 weisen eine runde Form auf, können also beispielsweise durch einfache Bohrungen in dem Ableiterblech realisiert sein. So können die Öffnungen 54 z.B. runde konisch zulaufende, kegelstumpfförmige oder pyramidenstumpfförmige Kontaktierungselemente 12 aufnehmen. Alternativ könnten die Öffnungen 54 auch eckig ausgebildet sein, um beispielsweise pyramidenförmige Kontaktierungselemente 12 aufzunehmen. Die Öffnungen 54 eines Ableiters 52, in welchen die Kontaktierungselemente 12 eines Verbinders 10 (Figur 1, Figur 2) eingepresst werden sollen, weisen dabei erfindungsgemäß eine kleinere Querabmessung 58 auf als die beim Einpressen der Kontaktierungselemente 12 in die Öffnungen 54 dazu korrespondierende größte Querabmessung 14 der Kontaktierungselemente 12.
**Figur 4** zeigt eine isometrische Darstellung eines Ableiters 52 einer elektrochemischen Zelle (nicht dargestellt) mit eingepresstem Verbinder 10 nach einem Ausführungsbeispiel der Erfindung. Der Verbinder 10 ist in der **Figur 4** von unten in den vorstehenden Bereich 53 des Ableiters 52 mit den Kontaktierungselementen 12 in die Öffnungen 54 eingeführt und so weit eingepresst, bis die pyramidenförmig ausgebildeten Kontaktierungselemente 12 in den Öffnungen 54 des Ableiters 52 anliegen. Mit weiter erhöhtem Einpressdruck ist es möglich, einen Form- und Stoffschluss der Kontaktierungselemente 12 mit dem Ableiter 52 zu erreichen, sodass eine feste und dauerhafte Kontaktierung zwischen Verbinder 10 und Ableiter 52 realisiert ist. Die Öffnungen 54 des Ableiters 52 weisen dazu eine kleinere Querabmessung 58 auf als die beim Einpressen der Kontaktierungselemente 12 in die Öffnungen 54 dazu korrespondierende größte Querabmessung 14 (Figur 1, Figur 2) der Kontaktierungselemente 12.

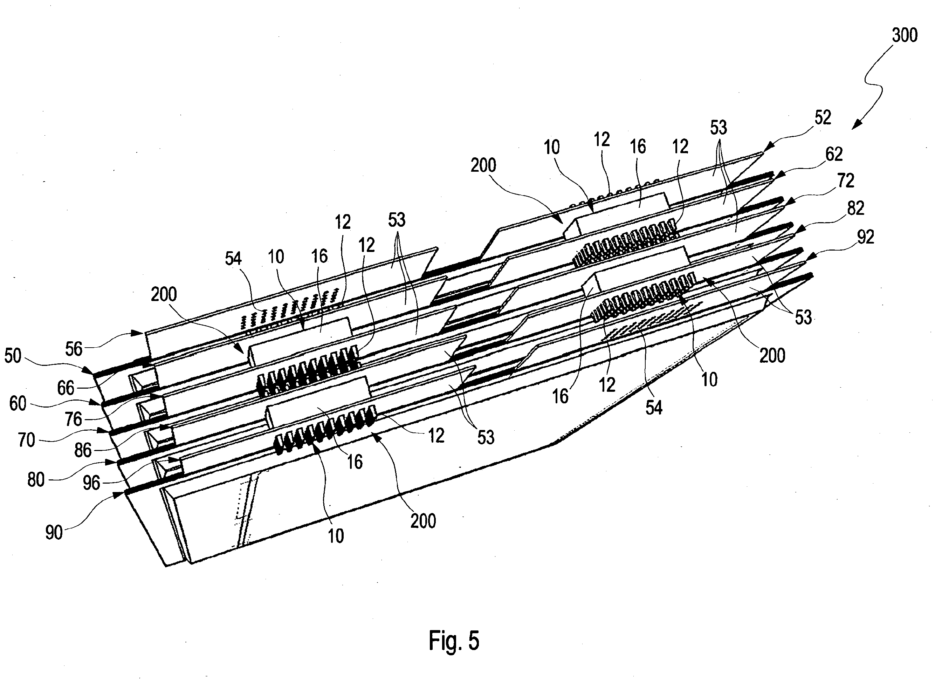

In **Figur 5** ist eine isometrische Darstellung eines elektrochemischen Speichers in Form eines Moduls 300 aus mehreren Zellen 50, 60, 70, 80, 90 zu sehen, welche mit Verbindungsanordnungen 200 zur elektrischen Kontaktierung der Zellen 50, 60, 70, 80, 90 nach einem Ausführungsbeispiel der Erfindung verbunden sind. Das Modul 300 besteht dabei aus mehreren stapelförmig nebeneinander angeordneten Zellen 50, 60, 70, 80, 90 in Gestalt von sogenannten Pouchzellen, wie sie beispielsweise häufig in Batterien auf Lithium-Basis Verwendung finden.

Eine elektrische Verbindungsanordnung 200 ist mit Verbindern 10, wie sie in den Figuren 1 und 2 beschrieben sind, dargestellt. Beispielsweise ist zwischen den Ableitern 52 und 62 der beiden elektrochemischen Zellen 50 und 60 eine Kontaktierung mit einem Verbinder 10 dargestellt, wie er in **Figur 2** beschrieben ist. Dabei weist der Verbinder 10 auf beiden Flachseiten seines Basiselements 16 Kontaktierungselemente 12 auf, welche zur elektrischen Kontaktierung in Kontaktierungsrichtung 100 quer zu den Ableitern 52, 62 in dazu in den Ableitern 52, 62 angeordnete korrespondierende Öffnungen 54 eingepresst sind.

In gleicher Weise sind Verbindungsanordnungen 200 zwischen den Ableitern 72, 82, 66, 76, 86, 96 der weiteren benachbarten Zellen 60, 70, 80 und 90 dargestellt, sodass das Modul 300, wenn die miteinander kontaktierten Ableiter 66 und 76, sowie die Ableiter 72 und 82, 86 und 96 der benachbarten Zellen 50, 60, 70, 80, 90 jeweils Anoden- und Kathodenableiter darstellen, in Serienschaltung verbunden ist. Die Gesamtspannung des Moduls 300 als Summe der Einzelspannungen der einzelnen Zellen 50, 60, 70, 80, 90 kann bei einer solchen Verschaltung der Zellen 50, 60, 70, 80, 90 dann zwischen den Ableitern 56 und 92 abgegriffen werden.

In einer günstigen Ausgestaltung können die Basiselemente 16 der Verbinder 10 mit einem wärmeableitenden Medium thermisch leitend verbunden sein, um die in den Batteriezellen und/oder Verbindungsanordnungen 200 erzeugte Wärme abzuführen, oder auch um die Zellen 50, 60, 70, 80, 90 auf eine gewünschte geeignete Betriebstemperatur einzustellen.

### Bezugszeichen

- 10: Verbindungsvorrichtung
- 12: Kontaktierungselement
- 14: Querabmessung
- 16: Basiselement
- 18: Flachseite
- 20: Flachseite
- 50: elektrochemische Zelle
- 51: hineinragender Bereich
- 52: Ableiter
- 53: vorstehender Bereich
- 54: Öffnung
- 55: Basiskörper
- 56: Ableiter
- 58: Querabmessung
- 60: elektrochemische Zelle
- 62: Ableiter
- 66: Ableiter
- 70: elektrochemische Zelle
- 72: Ableiter
- 76: Ableiter
- 80: elektrochemische Zelle
- 82: Ableiter
- 86: Ableiter
- 90: elektrochemische Zelle
- 92: Ableiter
- 96: Ableiter

- 100: Kontaktierungsrichtung

- 200: Verbindungsanordnung

- 300: elektrochemischer Speicher

## Patentansprüche

1. Elektrische Verbindungsanordnung (200) zwischen Ableitern (52, 62, 72, 82, 92, 56, 66, 76, 86, 96), umfassend wenigstens einen Ableiter (52, 62, 72, 92, 56, 66, 76, 86, 96) und einen Verbinder (10), wobei der Verbinder (10) ein Basiselement (16) mit zwei einander gegenüber liegenden Flachseiten (18, 20) aufweist, bei dem an mindestens einer der beiden Flachseiten (18, 20) ein oder mehrere Koutaktierungselermente (12) angeordnet sind deren Querschnitt sich in einer Kontaktierungsrichtung (100) quer zu mindestens einer der Flachseiten (18, 20) verjüngt und welche zur elektrischen Kontaktierung in Kontaktierungsrichtung (100) quer zum Ableiter (52, 62, 72, 82, 92, 56, 66, 76, 86, 96) in dazu in dem Ableiter (52, 62, 72, 82, 92, 56, 66, 76, 86, 96) angeordnete korrespondierende Öffnungen (54) einpressbar oder eingepresst sind
**dadurch gekennzeichnet, dass**
die Öffnungen (54) des Ableiters (52, 62, 72, 82, 92, 56, 66, 76, 86. 96) eine kleinere Querabmessung (58) aufweisen als die beim Einpressen der Kontaktierungselemente (12) in die Öffnungen (54) dazu korrespondierende größte Querabmessung (14) der Kontaktierungselemente (12).

2. Verbindungsanordnung nach Anspruch 1, wabe auf beiden einander gegenüber liegenden Flachseiten (13, 20) des Basiselements (16) ein oder mehrere Kontaktierungselemente (12) angeordnet sind.

3. Verbindungsanordnung nach einem der Ansprüche 1 oder 2, wobei das Basiselement (16) mit einem wärmeableitenden Medium thermisch leitend verbunden ist.

4. Verbindungsanordnung nach einem der vorgenannten Ansprüche, wobei die Kontaktierungselemente (12) in Form eines Kegelstumpfes ausgebildet sind, dessen breiterer Querschnitt dei jeweiligen Flachseite (18, 20) zugewandt ist.

5. Verbindungsanordnung nach einem der vorgenannten Ansprüche, wobei wenigstens ein Teil der Kontaktierungselemente (12) in Form eines Pyramidenstumpfes ausgebildet ist dessen breiterer Querschnitt der jeweiligen Flachseite (18, 20) zugewandt ist.

6. Verbindungsanordnung nach einem der vorgenannten Ansprüche, wobei die Kontaktierungselemente (12) matrixartig in regelmäßig beabstandeten Reihen und Spalten auf der oder den Flachseiten (18, 20) und/oder die Öffnungen (54) matrixartig in regelmäßig beabstandeten Reihen und Spalten angeordnet sind.

7. Verbindungsanordnung nach einem der vorgenannten Ansprüche, wobei zumindest ein Teil der Öffnungen (54) einen runden Querschnitt aufweist.

8. Verbindungsanordnung nach einem der vorgenannten Ansprüche, wobei zumindest ein Teil der Öffnungen (54) mit eckigem Querschnitt ausgebildet ist.

9. Elektrischeochemischer Speicher (200) mit wenigstens zwei Speicherzellen (50, 60, 70, 80, 90) mit einer elektrischen Verbindungsanordnung (200) zwischen Ableitern (52, 62, 72, 82, 92, 56, 66, 76, 86, 96) nach einem der vorgenannten Ansprüche.

## Claims

1. Electrical connection arrangement (200) between arresters (52, 62, 72, 82, 92, 56, 66, 76, 86, 96), comprising at least one arrester (52, 62, 72, 92, 56, 66, 76, 86, 96) and a connector (10), wherein the connector (10) comprises a base element (16) with two planar sides (18, 20) lying opposite one another, with one or more contact elements (12) being arranged on at least one of two planar sides (18, 20), of which the cross-section tapers in a contacting direction (100) transversely to at least one of the planar sides (18, 20), and which, for electrical contacting, can be pressed or are pressed in the contacting direction (100) transversely to the arrester (52, 62, 72, 82, 92, 56, 66, 76, 86, 96) into openings (54), corresponding to the contact elements, arranged in the arrester (52, 62, 72, 82, 92, 56, 66, 76, 86, 96),
**characterised in that**
the openings (54) of the arrester (52, 62, 72, 82, 92, 56, 66, 76, 86, 96) exhibit a smaller transverse dimension (58) than the largest transverse dimension (14) of the contact elements (12), at the pressing of the contact elements (12) into the corresponding openings (54).

2. Connection arrangement according to claim 1, wherein one or more contact elements (12) are arranged on both of the opposing planar sides (18, 20) of the base element (16).

3. Connection arrangement according to claim 1 or 2, wherein the base element (16) is connected in a thermally conducting manner to a thermally conductive medium.

4. Connection arrangement according to any one of the preceding claims, wherein the contact elements (12) are configured in the form of a truncated cone, of which the wider cross-section faces towards the respective planar side (18, 20).

5. Connection arrangement according to any one of the preceding claims, wherein at least a part of the contact elements (12) is configured in the form of a truncated pyramid, of which the wider cross-section faces towards the respective planar side (18, 20).

6. Connection arrangement according to any one of the preceding claims, wherein the contact elements (12) are arranged in matrix fashion, in regularly spaced rows and columns, on the planar side(s) (18, 20) and/or the openings (54) are arranged in matrix fashion in regularly spaced rows and columns.

7. Connection arrangement according to any one of the preceding claims, wherein at least a part of the openings (54) exhibit a round cross-section.

8. Connection arrangement according to any one of the preceding claims, wherein at least a part of the openings (54) are configured with an angular cross-section.

9. Electrochemical storage device (200) with at least two storage cells (50, 60, 70, 80, 90) with an electrical connection arrangement (200) between arresters (52, 62, 72, 82, 92, 56, 66, 76, 86, 96) according to any one of the preceding claims.

## Revendications

1. Agencement de liaison électrique (200) entre des dérivateurs de courant (52, 62, 72, 82, 92, 56, 66, 76, 86, 96) comprenant au moins un dérivateur (52, 62, 72, 82, 92, 56, 66, 76, 86, 96) et un connecteur (10), le connecteur (10) comprenant un élément de base (16) ayant deux faces planes (18, 20) opposées, sur au moins l'une des deux faces planes (18, 20) étant monté au moins un élément de mise en contact (12) dont la section diminue dans la direction de mise en contact (100) transversalement par rapport à au moins l'une des faces planes (18, 20) et qui, pour permettre la mise en contact électrique dans la direction de mise en contact (100) peut être ou est comprimé transversalement par rapport au dérivateur (52, 62, 72, 82, 92, 56, 66, 76, 86, 96) est introduit ou peut être introduit à force dans des ouvertures correspondantes (54) situées à cet effet dans ce dérivateur (52, 62, 72, 82, 92, 56, 66, 76, 86, 96),
**caractérisé en ce que**
les ouvertures (54) du dérivateur (52, 62, 72, 82, 92, 56, 66, 76, 86, 96) ont une dimension transversale (58) inférieure à la plus grande dimension transversale (14) des éléments de mise en contact (12) correspondant lors de l'introduction à force de ces éléments de mise en contact (12) dans les ouvertures (54).

2. Agencement de liaison conforme à la revendication 1,
dans lequel au moins un élément de mise en contact (12) est positionné sur les deux côtés plats (18, 20) opposés de l'élément de base (16).

3. Agencement de liaison conforme à l'une des revendications 1 à 2,
dans lequel l'élément de base (16) est relié en conduction thermique avec un fluide de dissipation thermique.

4. Agencement de liaison conforme à l'une des revendications précédentes,
dans lequel les éléments de mise en contact (12) sont réalisés sous la forme d'un tronc de cône dont la plus grande section est tournée vers la face plane (18, 20) respective.

5. Agencement de liaison conforme à l'une des revendications précédentes,
dans lequel au moins une partie des éléments de mise en contact (12) est réalisée sous la forme d'un tronc de pyramide dont la plus grande section est tournée vers la face plane (18, 20) respective.

6. Agencement de liaison conforme à l'une des revendications précédentes,
dans lequel les éléments de mise en contact (12) sont positionnés en forme de matrice selon des rangées et des colonnes régulièrement espacées sur la ou les face(s) plane(s) (18, 20) et/ou les ouvertures (54) sont positionnées en forme de matrice selon des rangées et des colonnes régulièrement espacées.

7. Agencement de liaison conforme à l'une des revendications précédentes,
dans lequel au moins une partie des ouvertures (54) ont une section circulaire.

8. Agencement de liaison conforme à l'une quelconque des revendications précédentes,
dans lequel au moins une partie des ouvertures (54) ont une section angulaire.

9. Accumulateur d'énergie électrique (200) ayant au moins deux cellules d'accumulation (50, 60, 70, 80, 90) comportant un agencement de liaison électrique (200) entre des dérivateurs (52, 62, 72, 82, 92, 56, 66, 76, 86, 96) conforme à l'une quelconque des revendications précédentes.
